# EUROPEAN PATENT SPECIFICATION

(11) **EP 3 024 909 B1**
(45) Date of publication and mention of the grant of the patent: **29.09.2021**
(21) Application number: 14828685.9
(22) Date of filing: 18.07.2014
(51) Int. Cl.: C09K 3/00

(54) **METALLIC ACRYLATE SALTS TO INCREASE POLYMER MELT STREINGTH**
METALLISCHE ACRYLATSALZE ZUR ERHÖHUNG DER FESTIGKEIT VON POLYMERSCHMELZE
SELS ACRYLATES MÉTALLIQUES PERMETTANT D'AUGMENTER LA RÉSISTANCE À L'ÉTAT FONDU D'UN POLYMÈRE

(30) Priority: 23.07.2013 US 201361857510 P
(43) Date of publication of application: 01.06.2016
(73) Proprietor: Fina Technology, Inc., Houston, TX 77267-4412 (US)
(72) Inventor: LI, Fengkui, Houston, TX 77059 (US); ASHBAUGH, John, Houston, TX 77040 (US)
(74) Representative: Garcia Martin, Margarita
(86) International application number: PCT/US2014/047256
(87) International publication number: WO 2015/013138

(56) References cited:
- EP-A1- 1 229 076
- US-A1- 2010 234 533
- US-A1- 2012 211 927
- US-A1- 2013 053 496
- US-A1- 2013 137 824
- DATABASE WPI Week 201020 Thomson Scientific, London, GB; AN 2010-C62395 XP002769580, -& JP 2010 053332 A (PRIME POLYMER CO LTD) 11 March 2010 (2010-03-11)

## Description

### CROSS-REFERENCE TO RELATED APPLICATIONS

This application claims priority from U.S. Provisional Application No. 61/857,510, filed on July 23, 2013.

### FIELD

Embodiments of the present disclosure generally relate to polymers mixed with metallic acrylate salts. Specifically, embodiments relate to polymers having improved properties.

### BACKGROUND

Polymers may be used for applications such as foam extrusion, sheet extrusion/thermoforming, extrusion coating, pipe extrusion, blowing molding and blown films. It may be desirable in certain of these applications to increase the melt viscosity of the polymer, particularly at lower sheer stress.

### SUMMARY

An embodiment of the present disclosure includes a composition. The composition includes a styrenic polymer and a metallic acrylate salt.

Another embodiment of the present disclosure includes a method of making a composition. The method includes melt mixing a styrenic polymer with a metallic acrylate salt.

### DESCRIPTION OF THE DRAWINGS

Fig. 1 is graph depicting complex viscosity versus frequency in rad/second consistent with the results of Example 1.
Fig. 2 is a graph depicting temperature versus heat flow consistent with the results of Example 2a.
Fig. 3 is a graph depicting temperature versus heat distortion strain consistent with the results of Example 2b.
Fig. 4 is a graph depicting temperature versus shear modulus consistent with the results of Example 2c.
Fig. 5 is a graph depicting elongational velocity versus time consistent with the results of Example 8.

### DETAILED DESCRIPTION

### Introduction and Definitions

A detailed description will now be provided. The description includes specific embodiments, versions and examples, but the disclosure is not limited to these embodiments, versions or examples, which are included to enable a person having ordinary skill in the art to make and use the disclosure when that information is combined with available information and technology.

Various terms as used herein are shown below. To the extent a term used in a claim is not defined below, it should be given the broadest definition skilled persons in the pertinent art have given that term as reflected in printed publications and issued patents at the time of filing. Further, unless otherwise specified, all compounds described herein may be substituted or unsubstituted and the listing of compounds includes derivatives thereof.

Further, various ranges and/or numerical limitations may be expressly stated below. It should be recognized that unless stated otherwise, it is intended that endpoints are to be interchangeable. Further, any ranges include iterative ranges of like magnitude falling within the expressly stated ranges or limitations.

### Polymers

Polymers useful in this disclosure include styrenic polymers. The polymer can also include functionalized versions of the above.

Styrenic monomers useful in the present disclosure include monovinylaromatic compounds such as styrene as well as alkylated styrenes wherein the alkylated styrenes are alkylated in the nucleus or side-chain. Alphamethyl styrene, t-butylstyrene, p-methylstyrene, methacrylic acid, and vinyl toluene are monomers that may be useful in forming a polymer of the disclosure. These monomers are disclosed in U.S. Pat. No. 7,179,873 to Reimers et al., which is incorporated by reference in its entirety. The styrenic polymer may be a homopolymer or may optionally comprise one or more comonomers. As used herein the term styrene includes a variety of substituted styrenes (e.g. alpha-methyl styrene), ring substituted styrenes such as p-methylstyrene, distributed styrenes such as p-t-butyl styrene as well as unsubstituted styrenes, and combinations thereof.

The monovinylidene aromatic polymer may be general purpose polystyrene or a rubber modified polymeric composition, such as high impact polystyrene, where an amount of rubber in dispersed in a styrenic matrix. Polybutadiene or a polymer of a conjugated 1,3-diene may be used in an amount of from 0.1 wt% to 50 wt% or more, or from 1% to 30% by weight of the rubber-styrene solution.

### Metallic carboxylate salts

Embodiments of the disclosure include contacting the polymer with certain metallic acrylate salts represented by the formula: M (OOC)-CR1=CR2,R3, where M is a metal and R1 is hydrogen or methyl and R2, R3 are hydrogen. M can be an alkali metal or alkaline earth metal such as Zn, Ca, Mg, Li, Na, Pb, Sn, K or combinations thereof. In certain embodiments, M is Zn. Examples of these salts include, but are not limited to, zinc diacrylate, zinc dimethacrylate, zinc monomethacrylate, and sodium acrylate such as those from HSC Cray Valley called Dymalinks. The mixture of the polymer and metallic acrylate salt may include between 0.001 and 30 wt% of the metallic acrylate salt, between 0.01 and 25 wt% of the metallic acrylate salt, between 0.1 and 20 wt% of the metallic acrylate salt, or from 0.5 to 15 wt% of the metallic acrylate salt.

In certain embodiments of the present disclosure, the metallic acrylate salt may be mixed with a peroxide activator. Peroxide activators may be organic peroxides, which include, but are not limited to LUPEROX® 101, commercially available from Arkema, Inc., Trigonox 101 and Trigonox 301, commercially available from AkzoNobel, Inc., for example. The concentration of the peroxide activator may range from 1 ppm to 50000 ppm, or from 10 ppm to 10000 ppm, or from 10 to 1000 ppm based on the concentration of the metallic acrylate salt.

Mixing of the metallic acrylate salt with the polymer may be performed by melt mixing using medium to high intensity mixing equipment including single and twin screw extruders, banbury mixers, or roll mill provided the metallic acryalte salt is adequately dispersed. Temperatures utilized for mixing may be 30°C above the melting point of the polymer. In particular embodiments, the polymer/metallic acrylate salt may be heated above 200°C, or between 200 - 260 °C. In certain embodiments of the present disclosure, such as when a peroxide activator is used, the metallic acrylate salt may be formed *in situ, i.e.,* may be formed during the melt mixing process. For instance, in one embodiment, the metallic acrylate salt may be formed by mixing zinc oxide with acrylic acid while mixing with the polymer. The zinc oxide and acrylic acid will react during the melt mixing process to form a zinc acrylate.

In certain embodiments of the present disclosure, the mixture of the polymer and metallic acrylate salt may result in viscosity modification (increase), strain hardening, crystalline nucleation, heat deflection temperature (HDT) increase, and modulus increase.

### Product Application

The polymers and blends thereof are useful in polymer fabrication processes known to one skilled in the art, where high melt strength is required. These include foaming, sheet extrusion thermoforming, extrusion blow molding, injection stretch blow molding, blown film, extrusion coating, roto-molding, profile or pipe extrusion. Films include shrink film, cling film, stretch film, sealing films, oriented films, snack packaging, heavy duty bags, grocery sacks, baked and frozen food packaging, medical packaging, industrial liners, and membranes, for example, in food-contact and non-food contact applications. Extruded articles include foamed articles used for insulation board, acoustical dampening, energy absorbing articles for automotive parts etc., and foamed food packaging containers, for example. Extruded articles also include medical tubing, wire and cable coatings, sheets, such as thermoformed sheets (including profiles and plastic corrugated cardboard), geomembranes and pond liners, for example. Molded articles include single and multi-layered constructions in the form of bottles, tanks, large hollow articles, rigid food containers and toys, for example.

### Examples

### Example 1 - Polyethylene with Metal Salts (not according to the invention)

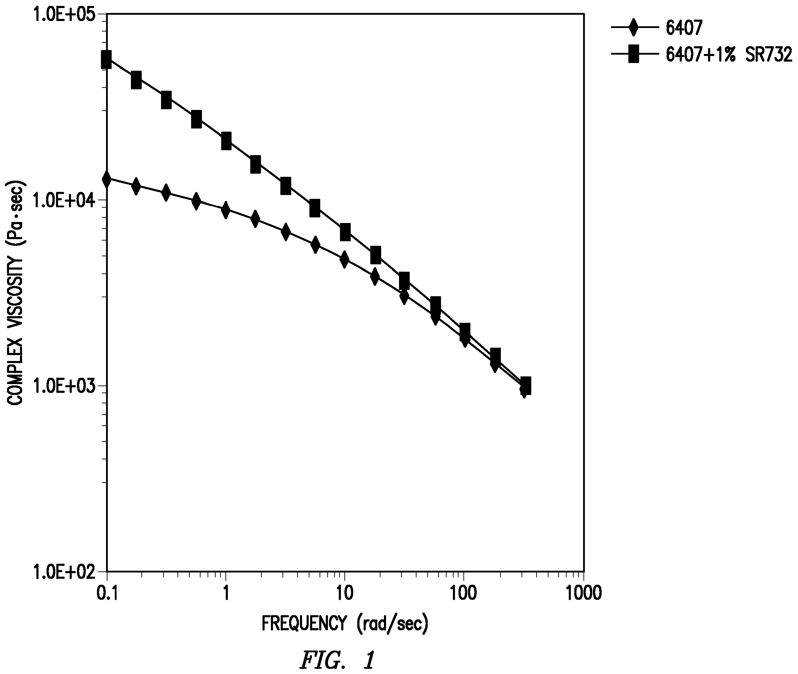

Total 6407 (commercially available from Total Petrochemicals and Refining USA, Inc.), a 0.7 dg/min MI2, 0.961 g/cc density polyethylene, was melt blended with 1% by weight Dymalink D705 (formerly called SR372), a metallic acrylate salt (zinc diacrylate) made by Cray Valley. Addition of D705 significantly lowered the melt indexes of Total 6407 as shown in Table 1. The rheological results also indicated significant increase in melt viscosity especially zero shear viscosity, which was consistent with the melt strength increase as evidenced by the results of extrusion melt strand sag resistance shown in Table 1 and in Fig. 1.

**Table 1**

| Sample | Melt Index (g/10 min) | | | Rheo Freq Temp | | | | | |
|---|---|---|---|---|---|---|---|---|---|
| | MI2 | MI5 | HLMI | Ea (J/mol) | ZSV (Pas) | t(s) | a | T(°C) | n |
| 6407 + AO | 0.74 | 2.29 | 23.4 | 24.47 | 19600 | 0.01042 | 0.2937 | 190 | 0 |
| 6407 + AO+ 1% SR 732 | 0.02 | 0.27 | 10.5 | 27.05 | 19724214 | 0.1706 | 0.0903 | 190 | 0 |

### Example 2 - Polypropylene with Metal Salts (not according to the invention)

Total Petrochemicals polypropylene 3270, 3371, and M3282 were melt blended with 2% and 5% Dymalink D705, a metallic carboxylate salt made by Cray Valley. Addition of D705 significantly lowered the melt indexes of all the polypropylene resins selected for the study, indicating increased viscosity of polypropylene in the presence of the metallic acrylate salt as shown in Table 2.

**Table 2**

| | | | |
|---|---|---|---|
| **MFR[g/10min]** | **3270** | **3371** | **M3282MZ** |
| 0% D705 | 2.8 | 5.1 | 6.5 |
| 2% D705 | 1.5 | 2.1 | 4.3 |
| 5% D705 | 1.3 | 1.3 | 3.3 |

Different types of polypropylene were melt blended with 2% Dymalink D705 and the viscocity compared to the same polypropylene made without the Dymalink D705. Results are shown in Tables 2a.

**Table 2a**

| **Compound #** | **7625** | **7625 + 2%D705** | **Z9450** | **Z9450 +2%D705** |
|---|---|---|---|---|
| **PP Type** | RCP | RCP | RCP | RCP |
| **MFR (dg/min)** | 19.7 | 6.6 | 10.1 | 1.7 |
| | | | | |

| **Compound** # | **4524** | **4524 + 2%D705** | **4921** | **4921 + 2%D705** |
|---|---|---|---|---|
| **PP Type** | ICP | ICP | ICP | ICP |
| **MFR (dg/min)** | 4.5 | 0.71 | 120 | 72 |
| | | | | |

| **Compound #** | **1471** | **1471 + 2%D705** | **3282** | **3282 + 2%D705** |
|---|---|---|---|---|
| **PP Type** | sPP | sPP | miPP | miPP |
| **MFR (dg/min)** | 3.3 | 1.58 | 6.5 | 4.3 |

RCP refers to polypropylene random copolymers, which for Table 2a, are Total 7625 and Total Z9450, commercially available from Total Petrochemicals and Refining USA, Inc. ICP refers to polypropylene impact copolymers, which, for Table 2a are Total 4524 and Total 4921, commercially available from Total Petrochemicals and Refining USA, Inc. siPP refers to metallocene-based syndiotatic polypropylene, which, for Table 2a is Total 1471, commercially available from Total Petrochemicals and Refining USA, Inc. miPP refers to metallocene-based isotactic polypropylene, which, for Table 2a, is Total 3282, commercially available from Total Petrochemicals and Refining USA, Inc.

### Examples 2a, 2b, 2c, and 2d (not according to the invention)

The four examples were conducted by combining 1% by weight of the D705 additive with PP LX1-12-03, a mini-random polypropylene. Differential Scanning Calorimetry (Example 2a), Heat Distortion Temperature (Example 2b), Dynamic Mechanical Analysis (Example 2c), and Hardness (Example 2d) testing were performed. For each example, four samples were created:
Injection Mold: Control
Injection Mold: D705
Compression Mold: Control
Compression Mold: D705

Both the control samples and the 1% by weight D705 samples were extruded at 390°F. The samples were produced by injection molding and compression molding.

The injection molded samples were produced using a DSM micro injection molding machine with the half IZOD mold. The samples were heated to 225°C for 3 minutes and injected into the mold (set at 60°C).

The compression molded samples were molded using an automated compression molder at 177°C (10 min low pressure, 10 min high pressure) with a cooling rate of 10°C/min. A 0.120" thick plaque was employed to produce samples that are about 3 mm thick. The samples were completely melted and uniform plaques obtained. After further cooling, the full IZOD specimens were punched out of the plaque. After at least 3 hours, to ensure complete cooling, each sample was polished flat by hand using a polish wheel in water before testing was performed.

The injection molded samples required more polishing than the compression molded samples. The injection molded control samples exhibited more shrinkage than the samples that included the D705 additive. The control samples required more polishing to produce a uniformly flat specimen.

### Example 2a - Differential Scanning Calorimetry (DSC)

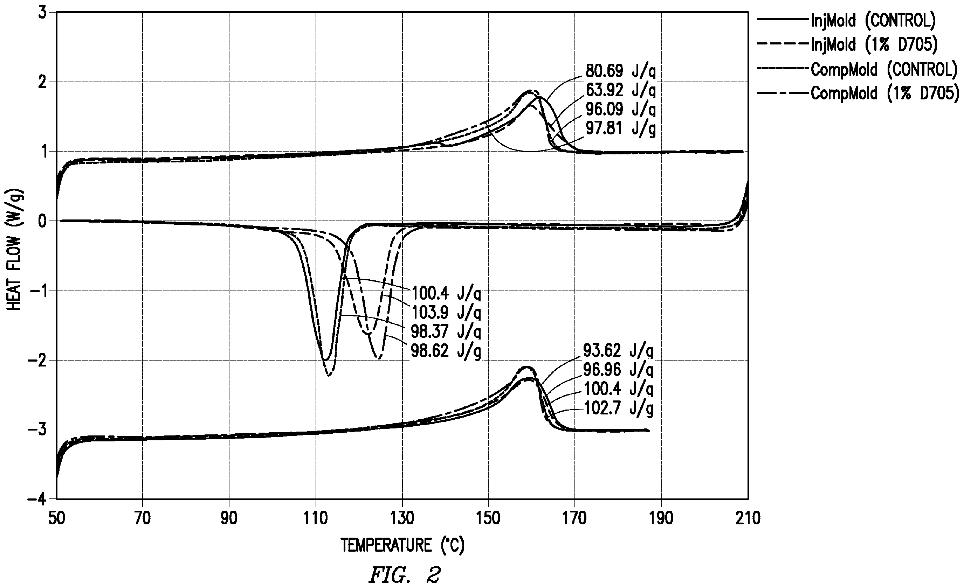

Each of the four samples was tested using the DSC with heating and cooling rates of 10 °C/min. The results are compiled in Fig. 2, where the top most curves show initial heating, the center curves show subsequent cooling, and the bottom curves show the final reheating stage. The numerical values presented near each curve correspond to the energy absorbed by the material relative to the baseline.

The initial heating results may suggest the injection molded samples have less initial structure (i.e., crystallinity) than the compression molded samples. The D705 reduces the crystallinity of the injection molded samples, but has little impact on the compression molded parts. The subsequent cooling segments show that the crystallization temperature is raised by about 10°C for the samples that included D705. The reheating segment shows a change in behavior as compared to the initial heating curve. In the injection molded samples with 1% D705, the energy was increased beyond the injection molded control case.

### Example 2b - Heat Distortion Temperature (HDT)

HDT testing was conducted on TA-Q800 (available form TA Instruments) with a method analogous to ASTM E2092-09, as described in ASTM Standard E2092-09: "Standard test method for distortion temperature in three-point bending by thermomechanical analysis", Annual Book of Standards, Vol. 08.04, ASTM International, West Conshohocken, PA, 2009. The settings and HDT values are summarized in Table 3. The 3pt-bend fixture that was employed has free ends, with stationary roller supports. Testing was extended beyond the normal maximum bending strain to illustrate the differences in performance for bending strains exceeding 0.5% strain. After test completion, the strain was shifted such that zero strain corresponded to an initial temperature of 30°C.

**Table 3**

| **HDT Settings** | **Value** | **Sample Description** | **HDT (°C)** |
|---|---|---|---|
| 3pt Bend Span (mm) | 50 | Inj. Mold (Control) | 87.8 |
| Applied Max Stress (MPa) | 0.455 | Inj. Mold (1% D705) | 108.5 |
| Initial Temperature (°C) | 30 | Comp. Mold (Control) | 120.0 |
| Threshold Strain (%) | 0.2 | Comp. Mold (1% D705) | 122.7 |

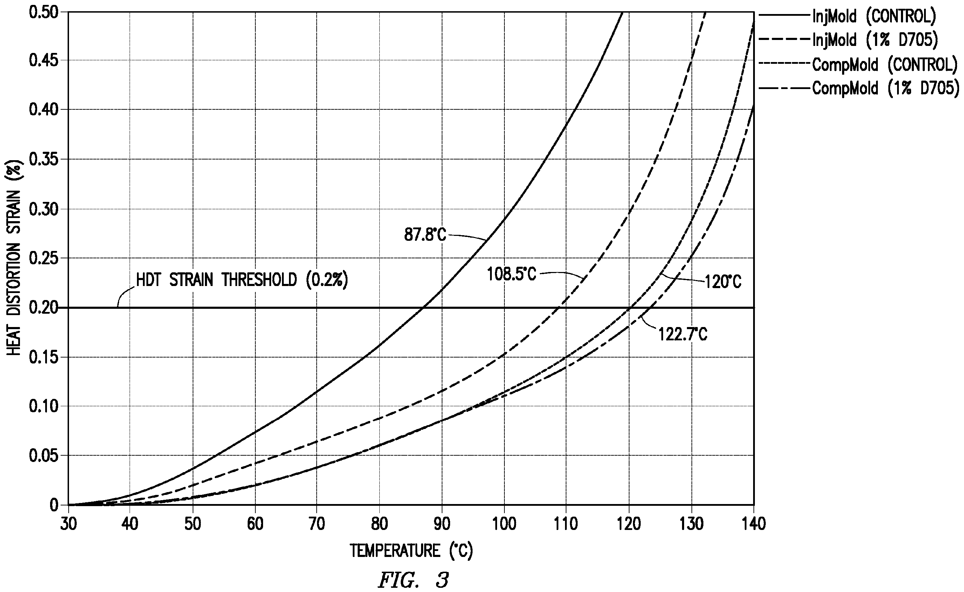

The test for each sample was repeated four times and averaged to produce the data in Fig. 3. The curves in Fig. 3 do not intersect, suggesting that the HDT result would persist for any threshold strain chosen. The injection molded samples exhibited reduced HDT performance compared to the compression molded samples. The D705 additive provides a 25% improvement in HDT performance for the injection molded samples and a 2% improvement for the compression molded samples.

### Example 2c - Dynamic Mechanical Analysis (DMA)

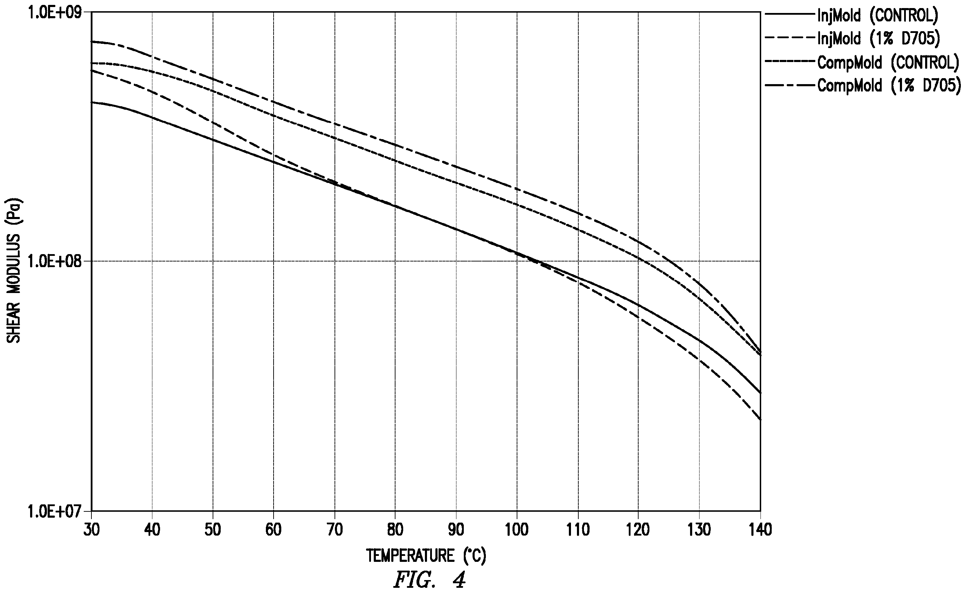

TA-RDA-2 equipment was employed to conduct a temperature sweep (30°C to 140°C) at a torsional frequency of 5 Hz and a shear strain magnitude of 0.5% strain. The shear modulus (stiffness) versus temperature is presented in Fig. 4. The compression molded sample exhibited higher stiffness than the injection molded sample. Specifically, the 1% by weight D705 compression molded sample exhibited the highest stiffness.

### Example 2d - Hardness (Shore D)

The hardness was tested in duplicate on a flat segment of each tested HDT sample. The hardness was recorded to the nearest whole number after a 2 second holding period. The results were averaged over all measurements (at least 8 values). A summary of these averaged results is presented in Table 4. For both molding conditions, 1% by weight D705 additive resulted in an improvement in hardness.

**Table 4**

| **Specimen Description** | **Hardness (Shore D)** |
|---|---|
| Injection Molded (Control) | 73 |
| Injection Molded (1% D705) | 74.6 |
| Comp. Molded (Control) | 74.8 |
| Comp. Molded (1% D705) | 77.4 |

As shown by Examples 2a - 2d, adding 1% (by weight) of D705 to polypropylene:
- increases the temperature of crystallization;
- improves HDT;
- increases torsional stiffness at room temperature; and
- increases the hardness at room temperature.

### Example 3 - Maleic Anhydride Grafted Polypropylene (not according to the invention)

Polybond 3150 (availabe from Addivant), a maleic anhydride grafted polypropylene was blended with 2% by weight Dymalink D705 (formerly called SR732). Significant melt index drop was obtained. When additional potassium hydroxide (1% by weight) was present, the melt index dropped even further, indicating a possible synergistic effect of PP-based ionomer and metallic acrylate salts on improving polypropylene melt strengths. These effects are shown in Table 5.

**Table 5**

| **PP-g-MAH** | **MFR[g/10min]** |
|---|---|
| 0% SR732 | 2.8 |
| 2% SR732 | 1.5 |
| 2% SR732/1%KOH | 1.3 |

### Example 4 - Polystyrene with Metal Salts

Total Petrochemicals polystyrene 523W (availabe from Total Petrochemicals and Refining USA, Inc.) was melt blended with 2% by weight Dymalink D705 made by Cray Valley. The melt flow rates were measured under polypropylene conditions. The addition of the Dymalink D705 effectively lowered the melt flow rate of the polystyrene, indicating that the metallic acrylate salt could effectively boost the melt strength of polystyrene-based materials. These effects are shown in Table 6.

**Table 6**

| **523W** | **MFR[g/10min]** |
|---|---|
| 0% D705 | 12 |
| 2% D705 | 10 |

### Example 5 - showing effect of different metal acrylates: D705, D708, and D709. (not according to the invention)

Polypropylene fluff (Total 3354, 4.5 MFR, availabe from Total Petrochemicals and Refining USA, Inc.) was mixed with antioxidants (500 ppm of Irganox 1010, 500 ppm of Irgafos 168, both available from BASF), 500 ppm of a neutralizer (DHT 4V, available from Kisuma Chemicals), 200 ppm of a peroxide Trigonox 301 (available from AkzoNobel), and 2 ppm of Dymalink D705 (zinc diacrylate), 2 ppm of D708 (zinc dimethacrylate), or 2 ppm of D709 (zinc monomethacrylate), each available from Cray Valley, as shown in Table 7. The powder mixture was then pelletized using a twin screw extruder with targeted melt temperature of 445 °F. The resulting melt flow rate (MFR) was measured according to ASTM D-1238. The results show the viscosity increase resulting from the D705, D708, or D709 addition.

**Table 7**

| Compound # | 1 | 2 | 3 | 4 |
|---|---|---|---|---|
| PP fluff | 3354 | 3354 | 3354 | 3354 |
| IR 1010 (ppm) | 500 | 500 | 500 | 500 |
| IR 168 ppm | 500 | 500 | 500 | 500 |
| DHT 4V (ppm) | 500 | 500 | 500 | 500 |
| T301 (ppm) | 200 | 200 | 200 | 200 |
| D705 (%) | 0 | 2 | 0 | 0 |
| D708 (%) | 0 | 0 | 2 | 0 |
| D709 (%) | 0 | 0 | 0 | 2 |
| MFR (dg/min) | 10.8 | 3.2 | 5.8 | 5.1 |

### Example 6-showing the effect of calcium diacrylate (D636) and sodium acrylate on PP viscosity. (not according to the invention)

Polypropylene fluff (Total 3354, 4.5 MFR, available from Total Petrochemicals and Refining USA, Inc.) was mixed with antioxidants (500 ppm of Irganox 1010, 500 ppm of Irgafos 168), 500 ppm of a neutralizer (DHT 4V), 50 ppm of a peroxide Perkadox 24L (available from AkzoNobel), and 2 ppm of either Dymalink D705, D636 (available from Cray Valley) or sodium acryalte powder as shown in Table 8. The powder mixture was then pelletized using a twin screw extruder with targeted melt temperature of 445 °F. The resulting melt flow rate (MFR) was measured according to ASTM D-1238. The results show the viscosity increase resulting from the D705, D636, or sodium acrylate addition.

**Table 8. PP formulations and resulting MFRs after extrusion.**

| Compound # | 1 | 2 | 3 | 4 | 5 |
|---|---|---|---|---|---|
| PP fluff | 3354 | 500 | 3354 | 3354 | 3354 |
| IR 1010 (ppm) | 500 | 500 | 500 | 500 | 500 |
| IR 168 ppm | 500 | 500 | 500 | 500 | 500 |
| DHT 4V (ppm) | 500 | 500 | 500 | 500 | 500 |
| Perkadox 24L (ppm) | 0 | 50 | 50 | 50 | 0 |
| D705 (%) | 0 | 0 | 2 | 0 | 0 |
| D636 (%) | 0 | 0 | 0 | 2 | 0 |
| Na Acrylate (%) | 0 | 0 | 0 | 0 | 2 |
| MFR (dg/min) | 5.6 | 5.8 | 0.96 | 3.8 | 4.7 |

### Comparative Example 1

Polypropylene fluff (Total 3354, 4.5 MFR) was mixed with antioxidants (500 ppm of Irganox 1010, 500 ppm of Irgafos 168), 500 ppm of a neutralizer (DHT 4V), and Dymalink D705, zinc stearate or calcium stearate as shown in Table 9. The powder mixture was then pelletized using a twin screw extruder with targeted melt temperature of 445 °F. The resulting melt flow rate (MFR) was measured according to ASTM D-1238. The results show the viscosity increase resulting from the D705 addition.

**Table 9**

| Compound # | Control | 1 | 2 | 3 | 4 |
|---|---|---|---|---|---|
| PP fluff | 3354 | 3354 | 3354 | 3354 | 3354 |
| IR 1010 (ppm) | 500 | 500 | 500 | 500 | 500 |
| IR 168 ppm | 500 | 500 | 500 | 500 | 500 |
| DHT 4V (ppm) | 500 | 500 | 500 | 0 | 0 |
| ZnSt (%) | 0 | 0 | 0 | 0 | 1 |
| CaSt (%) | 0 | 0 | 0 | 1 | 0 |
| D705 (%) | 0 | 2 | 1 | 0 | 0 |
| MFR (dg/min) | 4.7 | 0.87 | 1.6 | 4.9 | 5.9 |
| Amp | 42 | 52 | 53 | 58 | 52 |
| Pressure | 400 | 440 | 340 | 340 | 310 |

As shown in Comparative Example 1, calcium stearate and zinc stearate do not result in a viscosity increase, while zinc diacrylate does result in a viscosity increase.

### Example 7-Effect of D705 on PP foam (not according to the invention)

Polypropylene fluff (Total LX1 12-03, 4.5 MFR) was mixed with antioxidants (500 ppm of Irganox 1010, 500 ppm of Irgafos 168), 500 ppm of a neutralizer (DHT 4V) for Sample A. Polypropylene fluff (Total LX1 12-03, 4.5 MFR) was mixed with antioxidants (500 ppm of Irganox 1010, 500 ppm of Irgafos 168), 500 ppm of a neutralizer (DHT 4V) + 2% by weight of D705 for Sample B. The powder mixtures were pelletized using a twin screw extruder with targeted melt temperature of 445 °F. The resulting pellets were extruded using a tandem foam extruder using CO₂ gas injection to produce a foam sheet. The resulting sheet foam densities are shown in Table 10. The D705 addition effectively improved the foaming.

**Table 10**

| Material | Foam Density | Density Reduction |
|---|---|---|
| Sample A | 0.5690 | |
| Sample B | 0.3861 | 32.0% |

### Example 8 - Effect of re-extrusion (not according to the invention)

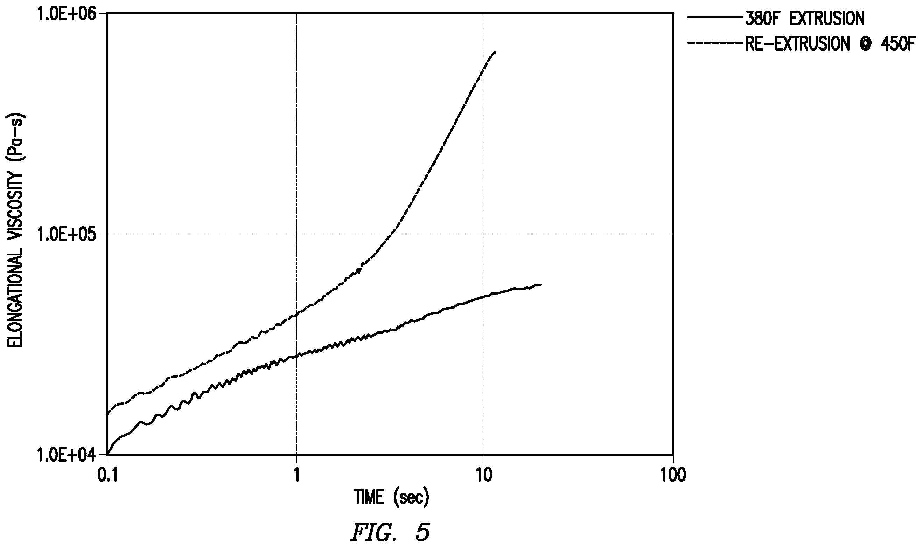

Polypropylene (Total 3354) was mixed and compounded with D705 at 380°F and then re-extruded at 450°F. Figure 5 depicts the increase of strain hardening of the mixture after re-extrusion.

### Example 9 - Effect of re-extrusion (not according to the invention)

Table 11 shows the elongational viscosity ratio (EVR) for samples extruded at 380°F and then re-extruded at 450°F. The elongational viscosity ratio is defined by the equation: EVR = elongational viscosity (EV) at 10sec ÷ EV at 0.1sec. A higher EVR corresponds with more strain hardening.

**Table 11**

| Compound | EV ratio |
|---|---|
| 3354 + 2% D705 Extruded @ 380°F | 5 |
| 3354 + 2% D705 Extruded @ 380°F (Re-Extruded @ 450°F) | 28 |
| LX5 12-14 (2 MFI 1.6% C₂ mRCP) + 2% D705 Extruded @ 380°F | 2 |
| LX5 12-14 (2 MFI 1.6% C₂ mRCP) + 2% D705, Extruded @ 380°F (Re-extruded @ 450°F) | 49 |

Depending on the context, all references herein to the "disclosure" may in some cases refer to certain specific embodiments only. In other cases it may refer to subject matter recited in one or more, but not necessarily all, of the claims. While the foregoing is directed to embodiments, versions and examples of the present disclosure, which are included to enable a person of ordinary skill in the art to make and use the disclosures when the information in this patent is combined with available information and technology, the disclosures are not limited to only these particular embodiments, versions and examples. Other and further embodiments, versions and examples of the disclosure may be devised without departing from the basic scope thereof and the scope thereof is determined by the claims that follow.

## Claims

1. A composition comprising:
a styrenic polymer; and
a metallic acrylate salt.

2. The composition of claim 1, wherein the metallic acrylate salt is zinc diacrylate, zinc dimethacrylate, zinc monomethacrylate, calcium diacrylate or sodium acrylate.

3. The composition of claim 1, further comprising an organic peroxide.

4. The composition of claim 1, wherein the concentration of the metallic acrylate salt is between 0.001 and 30 wt % of the composition.

5. The composition of claim 1, wherein the concentration of the metallic acrylate salt is between 0.5 to 15 wt % of the composition.

6. The composition of claim 1, wherein the composition comprises the styrenic polymer, and wherein the styrenic polymer is polystyrene or a high impact polystyrene.

7. A method of making a composition comprising:
melt mixing a styrenic polymer with a metallic acrylate salt.

8. The method of claim 7, wherein the melt mixing is performed by a single and twin screw extruder, a banbury mixer, or a roll mill; or wherein the melt mixing step further comprises mixing an organic peroxide with the metallic acrylate salt and the polyolefin, the styrenic polymer or the polylactic acid.

9. The method of claim 7, wherein the metallic acrylate salt is zinc diacrylate, zinc dimethacrylate, zinc monomethacrylate, or sodium acrylate.

10. The method of claim 7, wherein the concentration of the metallic acrylate salt is between 0.001 and 30 wt % of the composition.

11. The method of claim 7, wherein the concentration of the metallic acrylate salt is between 0.5 to 15 wt % of the composition.

12. The method of claim 7, wherein the composition comprises the styrenic polymer, and wherein the styrenic polymer is polystyrene or a high impact polystyrene.

13. The method of claim 7, wherein the metallic acrylate salt is formed in situ during the melt mixing.

## Patentansprüche

1. Zusammensetzung, umfassend:
ein Styrolpolymer; und
ein metallisches Acrylatsalz.

2. Zusammensetzung nach Anspruch 1, wobei das metallische Acrylatsalz Zinkdiacrylat, Zinkdimethacrylat, Zinkmonomethacrylat, Calciumdiacrylat oder Natriumacrylat ist.

3. Zusammensetzung nach Anspruch 1, ferner umfassend ein organisches Peroxid.

4. Zusammensetzung nach Anspruch 1, wobei die Konzentration des metallischen Acrylatsalzes zwischen 0,001 und 30 Gew.-% der Zusammensetzung beträgt.

5. Zusammensetzung nach Anspruch 1, wobei die Konzentration des metallischen Acrylatsalzes zwischen 0,5 und 15 Gew.-% der Zusammensetzung beträgt.

6. Zusammensetzung nach Anspruch 1, wobei die Zusammensetzung das Styrolpolymer umfasst und wobei das Styrolpolymer Polystyrol oder ein schlagfestes Polystyrol ist.

7. Verfahren zum Herstellen einer Zusammensetzung, umfassend:
Schmelzmischen eines Styrolpolymers mit einem metallischen Acrylatsalz.

8. Verfahren nach Anspruch 7, wobei das Schmelzmischen von einem Ein- und Doppelschneckenextruder, einem Banbury-Mischer oder einer Walzenmühle ausgeführt wird; oder wobei der Schritt des Schmelzmischens ferner das Mischen eines organischen Peroxids mit dem metallischen Acrylatsalz und dem Polyolefin, dem Styrolpolymer oder dem Polylactid umfasst.

9. Verfahren nach Anspruch 7, wobei das metallische Acrylatsalz Zinkdiacrylat, Zinkdimethacrylat, Zinkmonomethacrylat oder Natriumacrylat ist.

10. Verfahren nach Anspruch 7, wobei die Konzentration des metallischen Acrylatsalzes zwischen 0,001 und 30 Gew.-% der Zusammensetzung beträgt.

11. Verfahren nach Anspruch 7, wobei die Konzentration des metallischen Acrylatsalzes zwischen 0,5 und 15 Gew.-% der Zusammensetzung beträgt.

12. Zusammensetzung nach Anspruch 7, wobei die Zusammensetzung das Styrolpolymer umfasst und wobei das Styrolpolymer Polystyrol oder ein schlagfestes Polystyrol ist.

13. Verfahren nach Anspruch 7, wobei das metallische Acrylatsalz in situ während des Schmelzmischens gebildet wird.

## Revendications

1. Composition comprenant:
un polymère styrénique ; et
un sel d'acrylate métallique.

2. Composition selon la revendication 1, dans laquelle le sel d'acrylate métallique est le diacrylate de zinc, le diméthacrylate de zinc, le monométhacrylate de zinc, le diacrylate de calcium ou l'acrylate de sodium.

3. Procédé selon la revendication 1, comprenant en outre un peroxyde organique.

4. Composition selon la revendication 1, dans laquelle la concentration du sel d'acrylate métallique est comprise entre 0,001 et 30 % en poids de la composition.

5. Composition selon la revendication 1, dans laquelle la concentration du sel d'acrylate métallique est comprise entre 0,5 et 15 % en poids de la composition.

6. Composition selon la revendication 1, dans laquelle ladite composition comprend du polymère styrénique, et le polymère styrénique est le polystyrène ou un polystyrène résistant aux chocs.

7. Procédé de préparation d'une composition comprenant :
le mélange à l'état fondu d'un polymère styrénique avec un sel d'acrylate métallique.

8. Procédé selon la revendication 7, dans lequel le mélange à l'état fondu est effectué par une extrudeuse monovis ou à double vis, un mélangeur Banbury ou un broyeur à cylindres ; ou l'étape de mélange à l'état fondu comprend en outre le mélange d'un peroxyde organique avec du sel d'acrylate métallique et de la polyoléfine, du polymère styrénique ou de l'acide polylactique.

9. Procédé selon la revendication 7, dans lequel le sel d'acrylate métallique est le diacrylate de zinc, le diméthacrylate de zinc, le monométhacrylate de zinc ou l'acrylate de sodium.

10. Procédé selon la revendication 7, dans lequel la concentration du sel d'acrylate métallique est comprise entre 0,001 et 30 % en poids de la composition.

11. Procédé selon la revendication 7, dans lequel la concentration du sel d'acrylate métallique est comprise entre 0,5 et 15 % en poids de la composition.

12. Procédé selon la revendication 7, dans lequel la composition comprend du polymère styrénique, et le polymère styrénique est le polystyrène ou un polystyrène résistant aux chocs.

13. Procédé selon la revendication 7, dans lequel le sel d'acrylate métallique est formé in situ lors du mélange à l'état fondu.
